**Europäisches Patentamt**

**European Patent Office**

**Office européen des brevets**

(19)

(11) Veröffentlichungsnummer : **0 114 053**
**B1**

(12)

# EUROPÄISCHE PATENTSCHRIFT

(45) Veröffentlichungstag der Patentschrift :
07.06.89

(51) Int. Cl.⁴ : **G 01 S 3/78**

(21) Anmeldenummer : **84100165.4**

(22) Anmeldetag : **10.01.84**

(54) Vorrichtung zum Ermitteln der Einfallsrichtung von optischer Strahlung.

(30) Priorität : **13.01.83 DE 3300849**

(43) Veröffentlichungstag der Anmeldung :
**25.07.84 Patentblatt 84/30**

(45) Bekanntmachung des Hinweises auf die Patenterteilung : **07.06.89 Patentblatt 89/23**

(84) Benannte Vertragsstaaten :
**DE FR GB**

(56) Entgegenhaltungen :
**CA—A— 1 083 338**
**US—A— 3 953 131**
**PATENTS ABSTRACTS OF JAPAN, Band 6, Nr. 183 (P-143)[1061], 18. September 1982; & JP - A - 57 97 475**

(73) Patentinhaber : **ALCATEL N.V.**
**Strawinskylaan 537 (World Trade Center)**
**NL-1077 XX Amsterdam (NL)**
**FR GB**
**Standard Elektrik Lorenz Aktiengesellschaft**
**Hellmuth-Hirth-Strasse 42**
**D-7000 Stuttgart 40 (DE)**
**DE**

(72) Erfinder : **Nestel, Siegfried, Dr.**
**Oberwiesenstrasse 43**
**D-7000 Stuttgart 75 (DE)**
Erfinder : **Böhm, Manfred, Dr.**
**Solitudestrasse 389**
**D-7000 Stuttgart 31 (DE)**

(74) Vertreter : **Schmidt, Werner, Dipl.-Phys. et al**
**Standard Elektrik Lorenz AG Patent- und Lizenzwesen Postfach 30 09 29**
**D-7000 Stuttgart 30 (DE)**

Jouve, 18, rue St-Denis, 75001 Paris, France

**Beschreibung**

Die Erfindung geht aus von einer Anordnung gemäß dem Oberbegriff von Anspruch 1.

Eine derartige Anordnung ist durch die US-A-3 953 131 bekannt. Die gewölbte, vorzugsweise kugelförmige Oberfläche ist in relativ große Flächenbereiche unterteilt. Die in den einzelnen Flächenbereichen gefaßten Lichtleiter sind mit ihrem anderen Ende auf Fotodetektoren ausgerichtet. Aus dem Vergleich der von den Fotodetektoren abgegebenen Signalamplituden wird auf die Einfallsrichtung der detektierten Strahlung geschlossen. Der den Flächenbereichen entsprechende Raumwinkel ist relativ groß, so daß die Richtungsbestimmung der detektierten Strahlung nur entsprechend grob möglich ist. Es kann jeweils nur die der maximalen Amplitude entsprechende Richtung angezeigt werden. Durch die Verwendung von Einzeldetektoren ist eine Vielzahl von Verstärkern, Triggerstufen, Komparatoren und Summierern erforderlich.

Aus der EP-A-0 082 045 sind zwei Einrichtungen zur Bestimmung des Einfallswinkels von Laserstrahlung in einer Ebene bekannt, mit denen nur ein Lichtsignal zu einem bestimmten Zeitpunkt erkannt werden kann. Die Richtungsbestimmung erfolgt durch Messen der Differenz der Lichtlaufzeit in zwei unterschiedlich langen Glasfaserabschnitten oder -stücken. Die Einrichtungen enthalten nur je einen optisch-elektrischen Wandler.

In der Bundesrepublik Deutschland gehört zum Stand der Technik die zeitrangältere DE-A-32 26 015, die eine Anordnung zum Abbilden einer Szene aus einem großen Raumwinkel auf einer Ebene betrifft. In der Oberfläche einer gewölbten Fläche, vorzugsweise Halbkugel, sind Lichtleiter mit dem einen Ende in parallelen Reihen ausgerichtet gefaßt. Die Lichtleiter sind am anderen Ende zu einem Bündel zusammengefaßt, in dem die Lichtleiter entsprechend der Reihenanordnung in der gewölbten Fläche in Reihen geordnet sind. Sie enden vor einer Abbildungsebene, über die die Szene bei sichtbarer Strahlung direkt beobachtet werden kann. Für Strahlung anderer Wellenlängen ist an Stelle der Abbildungsebene eine lichtempfindliche ladungsgekoppelte Halbleiteranordnung vorgesehen, die an eine elektronische Auswerteinrichtung mit Monitor angeschlossen ist.

Die Aufgabe der Erfindung besteht darin, eine Anordnung zum Ermitteln des Einfallswinkels von optischer Strahlung zu schaffen, die mit geringstem Aufwand eine exakte Richtungsbestimmung einer optischen Strahlung ermöglicht.

Diese Aufgabe wird durch die im Anspruch 1 angegebenen Merkmale gelöst.

Mit Weiterbildungen der Erfindung gemäß den Ansprüchen 5 und 6 ist zusätzlich die Erkennung der Wellenlänge der Strahlung möglich.

Die übrigen Unteransprüche zeigen vorteilhafte Ausgestaltungen des Erfindungsgegenstandes auf.

Die durch die Erfindung erzielten Vorteile bestehen insbesondere darin, daß eine sehr genaue Richtungsbestimmung einer einfallenden Strahlung und ihrer Intensität und gleichzeitig die Bestimmung der Wellenlänge des Strahlers möglich ist. Darüber hinaus lassen sich diese Werte aus einem einzigen, sehr kurzen Einzelimpuls ermitteln. Die ungeordnete Bündelung der Lichtleiter mit späterer elektrischer Zuordnung stellt eine wesentliche Herstellungsvereinfachung dar. Der Schaltungsaufwand ist relativ gering, so daß sich die Einrichtung kompakt und in leicht handhabbarer Form herstellen läßt. Die Detektormatrix kann aus einem einzigen Bauelement in Form eines integrierten CCD-Matrix-Fotodetektors (CCD = Charge Coupled Device) bestehen.

Anhand eines Ausführungsbeispiels wird die Erfindung in Verbindung mit den Zeichnungen nachfolgend näher erläutert. Es zeigen:

Fig. 1 einen Sensorkopf zur Ermittlung der Einfallsrichtung und der Intensität von Lichtstrahlung in schematischer Darstellung mit einer ersten Ausführungsform zur Ermittlung der Wellenlänge,

Fig. 2 einen vergrößerten Ausschnitt aus einer Teilfläche A der Fig. 1,

Fig. 3 das Blockschaltbild der Auswerteschaltung,

Fig. 4 eine zweite Ausführungsform zur Ermittlung der Wellenlänge und

Fig. 5 und 6 eine schematische Darstellung bzw. ein Diagramm zur Erläuterung der Funktionsweise der Ausführungsform gemäß Fig. 4.

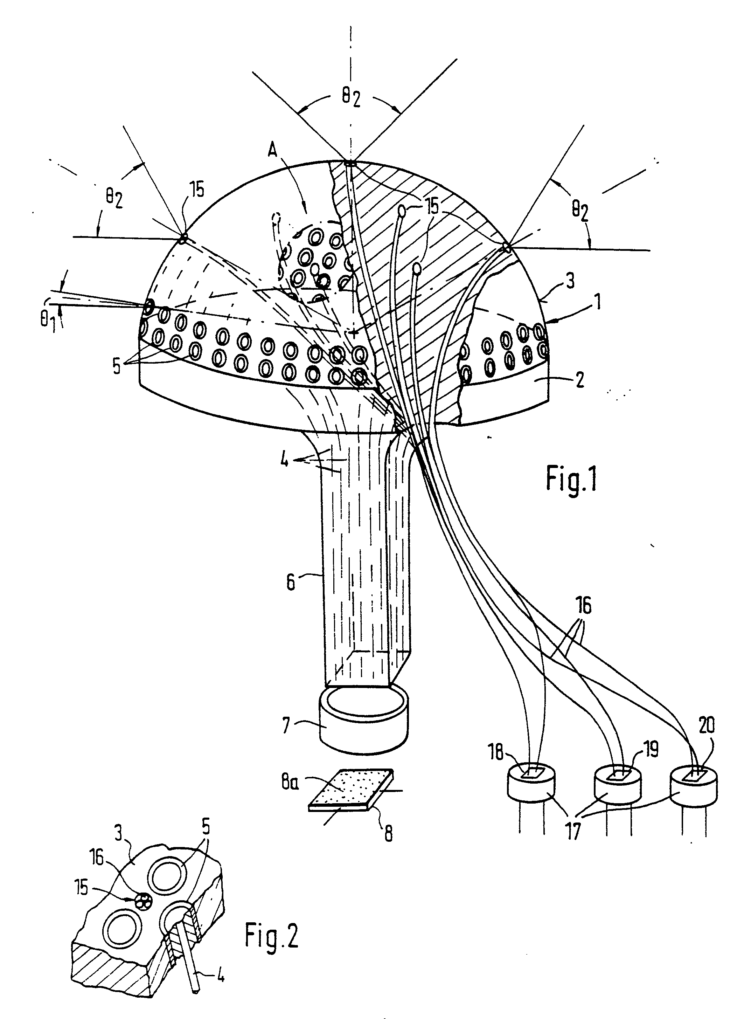

Fig. 1 zeigt in schematischer Darstellung einen Sensorkopf 1. Über einer Ringplatte 2 wölbt sich ein Körper mit halbkugelförmiger Außenfläche 3. Eine Vielzahl von Lichtleitern 4 ist etwa gleichmäßig über die Fläche 3 verteilt. Aus Gründen der besseren Übersicht sind nur zwei ringförmig angeordnete Reihen dargestellt, sowie eine Teilfläche A, aus denen die Verteilung über die gesamte Fläche 3 erkennbar ist. Die Lichtleiter 4 enden in Linsenkappen 5 (Fig. 2). Diese sind im Sensorkörper radial ausgerichtet eingebettet. Sie dienen dazu, den optischen Raumerfassungswinkel $\theta_1$ des einzelnen Lichtleiters 4 auf eine gewünschte Weite zu beschränken. Der Abstand der Lichtleiter 4 untereinander ist dabei so gewählt, daß sich ihre optischen Raumerfassungswinkel $\theta_1$ soweit überschneiden, daß keine toten Raumwinkel bestehen.

Die gesamten Lichtleiter 4 sind durch eine nicht sichtbare Ausnehmung in der Ringplatte 2 nach unten herausgeführt und ungeordnet zu einem Strang 6 zusammengefaßt. Die Querschnittsform des Stranges 6 ist der Detektorfläche 8a einer Detektormatrix 8 angepaßt. Zwischen der geschliffenen und polierten Stirnfläche des Stranges 6 und der Detektormatrix 8 ist eine Optik 7 vorgesehen. Die Optik kann z. B. eine Linsenoptik, eine Fresnellinse sein oder aus bienenwabenförmig aneinandergereihten stabförmigen Einzellinsen bestehen. Sie dient zur Konzentration der aus den Lichtleitern des Stranges 6 austretenden Strahlung auf die Detektorfläche 8a. Es kann jedoch auf sie verzichtet werden, wenn man Lichtleiter mit engen Abstrahlungswinkeln verwendet und deren Enden dicht an die Detektoroberfläche heranführt.

Die Detektormatrix 8 hat n Detektorelemente, wobei n erheblich größer sein kann als die Anzahl m der Lichtleiter 4. Das hat zur Folge, daß das Licht jedes einzelnen Lichtleiters 4 auf eine Vielzahl von Detektorelementen fallen kann. In diesem Fall muß nicht jeder Lichtleiter genau auf ein Detektorelement ausgerichtet werden. Im Spezialfall m = n kann bei genauer Positionierung der Lichtleiter, (z. B. mit Hilfe einer Fassung) auch nur ein einzelnes Detektorelement pro Lichtleiter verwendet werden.

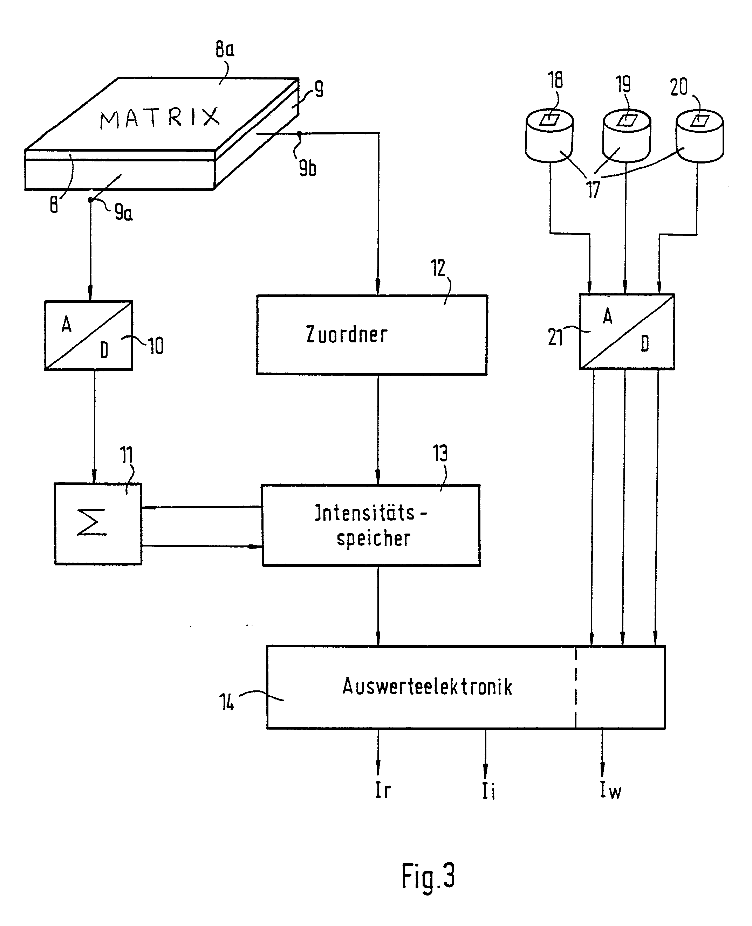

Die Detektormatrix 8 stellt die Schnittstelle zur nachgeordneten Auswerteschaltung dar, wie sie Fig. 3 zeigt. Bestandteil der Matrix 8 sind ladungsgekoppelte Schieberegister 9, die mit den Detektorelementen verbunden sind. Die über eine Auswerteelektronik 14 getakteten Schieberegister 9 haben einen Ausgang 9a, über den die Ladungszustände der zyklisch abgefragten Detektorelemente in Serie ausgegeben werden. Über einen Analog/Digitalwandler 10 gelangen die Signale auf einen Summierer 11. An einem Taktausgang 9b ist ein Zuordner 12 angeschlossen, der ein programmierbarer Festwertspeicher ist. Er hat so viele Speicherplätze, wie die Matrix 8 Detektorelemente hat.

In einem Zuordnungsprozeß bei der Herstellung der Vorrichtung wird der Speicher so programmiert, daß aus ihm entnehmbar ist, welches Detektorelement von welchem Lichtleiter Licht empfängt. Zur Ausblendung von Randzonen dient dabei eine Schwellwertschaltung dazu, daß nur die Speicherplätze markiert werden, deren zugehörige Detektorelemente ein Mindestsignal abgeben.

An den Ausgang des Zuordners 12 ist ein Intensitätsspeicher 13 angeschlossen. Dieser ist ein variabler Speicher mit m Speicherplätzen. Die entsprechend adressierten Speicherplätze stehen im aufgerufenen Zustand mit dem Summierer 11 im Informationsaustausch. Der Ausgang des Intensitätsspeichers 13 ist auf den Eingang einer Auswerteelektronik 14 geschaltet.

Eine einfallende Strahlung wird überlappend von benachbarten Lichtleitern miterfaßt. Damit ist die Möglichkeit einer elektronischen Richtungsinterpolation zur Steigerung der Richtungsgenauigkeit gegeben.

Über die Lichtleiter 4 und die Optik 7 werden die erfaßten Strahlungen auf die Detektorfläche 8a der Detektormatrix projiziert. Damit werden alle die Detektorelemente erregt, die durch die Lichtleiter 4 beleuchtet werden. Die Zeit der Erregung der Detektorelemente ist gleich der Impulslänge der Strahlung. Diese kann kleiner als 40 nsec. sein. In periodischen Zeitabständen erfolgt eine zeilenweise Abfrage sämtlicher Detektorelemente der Matrix 8 über die Schieberegister 9. Vom Analog-Ausgang 9a werden die Ladungszustände der nacheinander abgefragten Detektorelemente dem A/D-Wandler 10 und danach dem Summierer 11 zugeführt. Parallel dazu und im gleichen Takt erfolgt über den Ausgang 9b eine Ansteuerung des Zuordners 12. Dieser gibt in der Reihenfolge der Ausgabe der Detektorladungszustände an den Summierer 11 die jeweilige Nummer der Lichtleitfaser als Adresse auf den Intensitätsspeicher 13. Nach der Ansteuerung eines Speicherplatzes wird im Falle einer größeren Anzahl Detektorelemente n als Lichtleiter m der alte Inhalt des betreffenden Speicherplatzes dem Summierer 11 zugeführt und die Summe von altem Inhalt und derzeitigem Ladungswert gebildet und als neuer Wert wieder in den Speicher zurückgegeben. Am Ende des Abfragezyklus der Detektormatrix 8 sind im Speicher 13 unter der jeweiligen Nummer der von einer optischen Strahlung getroffenen Lichtleiter Werte enthalten, die ein Maß für die jeweils aufgenommene Strahlung sind. In der Auswerteelektronik 14 erfolgt die Zuordnung der Lichtleiter zu ihrer Orientierung im Azimut und in der Elevation. Durch eine Abfrage des Speichers 13 läßt sich somit exakt die Richtung bestimmen, aus der die empfangene optische Strahlung einfällt. Die Ladungswerte zeigen an, welche Intensität die Strahlung hat. Über Ausgänge Ir und Ii werden die Richtungs- und Intensitätsinformationen in aufbereiteter Form zur weiteren Auswertung oder Anzeige abgegeben. Die Intensität ist ein Anhaltspunkt für die Entfernung der Strahlungsquelle vom Sensorkopf.

Um pro Kanal eine größere Lichtausbeute zu erhalten, kann jeder optische Kanal mehrere Lichtleiter 4 umfassen. Diese sind dann gemeinsam in einer Linsenkappe 5 gefaßt.

Mit der vorbeschriebenen Vorrichtung ist es möglich, den Halbraum in einem Winkelbereich von 360° im Azimut und 180° in der Elevation lückenlos auf optische Strahlung zu überwachen, wobei außer der exakten Richtung auch die Intensität der erfaßten optischen Strahlung ermittelt werden kann. Dieses ist vornehmlich bei eng gebündelter Strahlung, z. B. bei Lasern von Bedeutung.

Es werden nun zwei vorteilhafte Weiterbildungen der Erfindung beschrieben, mit denen gleichzeitig zur Richtungserkennung die Erkennung der Wellenlänge der Strahlung möglich ist.

Bei der ersten Weiterbildung sind, wie in den Figuren 1 und 2 gezeigt, weitere, zu Bündeln 15 zusammengefaßte Lichtleiter 16 gleichmäßig über die Fläche 3 verteilt. Wie die Teilfläche A und der vergrößert dargestellte Ausschnitt in Fig. 2 zeigen, sind die Lichtleiterbündel 15 zwischen den Lichtleitern 4 angeordnet. Die Raumerfassungswinkel der Lichtleiterbündel 15 sind mit $\theta_2$ bezeichnet. Sie sind beim Ausführungsbeispiel so gewählt, daß mit sechs auf etwa halber Höhe der Fläche 3 und einem im Zenit angeordneten Lichtleiterbündel 15 der gesamte Halbraum abgedeckt ist. Die anderen Enden der Lichtleiterbündel 15 sind seitlich vom Strang 6 herausgeführt. Die einzelnen Fasern der Bündel sind in der nachstehend beschriebenen Weise mit drei Detektoren 17 verbunden. Die Zahl der Lichtleiter 16 pro Bündel 15 ist gleich der Anzahl der Detektoren 17. Im vorliegenden Beispiel hat also jedes Bündel 15 drei Lichtleiter 16, (Fig. 2), von denen je einer auf einen der Detektoren 17 geführt ist. Diese haben vorgeschaltete Filter 18, 19 bzw. 20 für bestimmte Wellenlängenbereiche. Die Ausgänge der Detektoren 17 sind gemäß Fig. 3 getrennt über einen A/D-Wandler 21 auf die Auswerteelektronik 14 geführt.

Eine aus einer beliebigen Richtung einfallende Strahlung wird damit außer durch die Lichtleiter 4 auch durch ein oder mehrere Lichtleiterbündel 15 erfaßt. Liegt die Wellenlänge der Strahlung im Durchlaßbereich von einem der Filter 18, 19 oder 20, so wird in der Auswerteelektronik 14 geprüft, ob über einen der Lichtleiter 4 im gleichen Zeitintervall Strahlung erfaßt wurde, welche die genaue Richtung angibt. In diesem Fall wird die Information über die Wellenlänge der detektierten Strahlung am Ausgang Iw zur weiteren Auswertung oder Anzeige abgegeben.

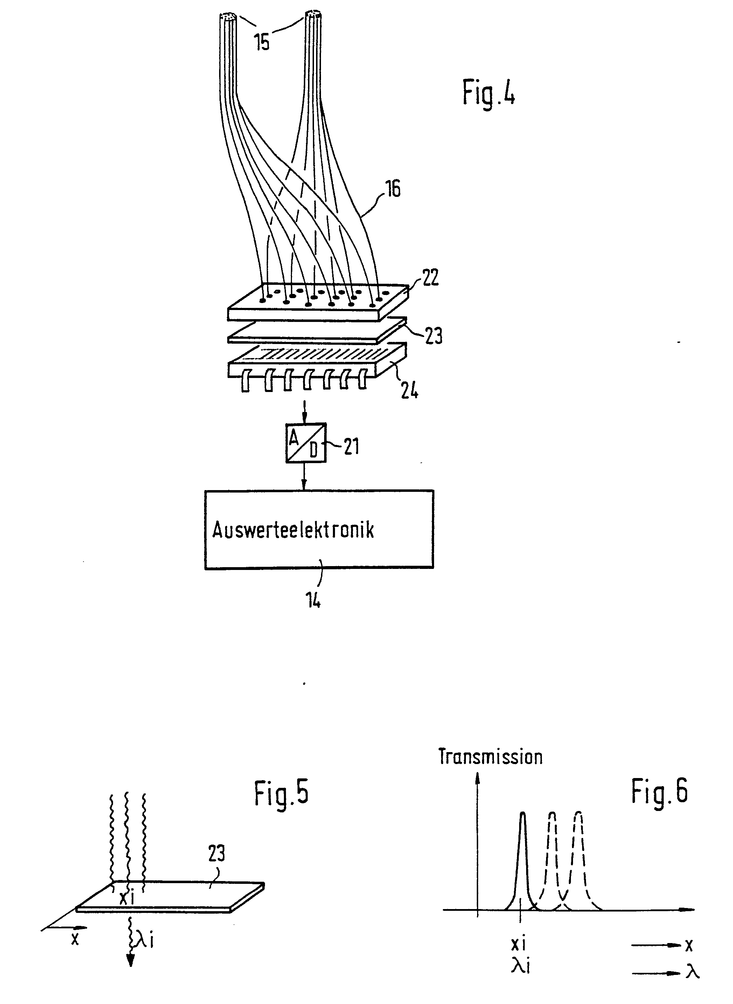

Bei der zweiten Weiterbildung, die in Fig. 4 gezeigt ist, sind die zu Bündeln 15 zusammengefaßten Lichtleiter 16 an ihren Enden zeilenförmig in gleichen Abständen in der Längsrichtung einer Steckfassung 22 fixiert, wobei das erste Bündel die erste Zeile belegt. Das nächste Lichtleiterbündel belegt mit seinen Lichtleitern die nächste Zeile der Steckfassung usw. Die Anzahl der Zeilen entspricht der Anzahl der Bündel 15 und die Anzahl der Steckpositionen einer Zeile entspricht der Anzahl der Lichtleiter 16 pro Bündel.

Die aus den Lichtleitern über durchgehende Löcher der Steckfassung 22 austretende Strahlung ist auf einen optischen Bandpaßkeil 23 gerichtet. Der optische Bandpaßkeil ist ein keilförmig beschichtetes Interferenzfilter, dessen Transmission gleich ist wie bei mehreren aneinander angrenzenden schmalen optischen Bandpässen, wobei deren Position X jeweils einem bestimmten Durchlaßbereich $\lambda_i$ zugeordnet ist und zwar dergestalt, daß sich hierdurch ein linearer Verlauf des gesamten Durchlaßbereichs ergibt, wie in Fig. 5 und Fig. 6 dargestellt. Der Bandpaßkeil läßt Strahlung mit einer diskreten Wellenlänge $\lambda_i$ im wesentlichen nur an einer einzigen Position $x_i$ durch; alle umgebenden Positionen $x_i \pm \Delta x$ außerhalb des schmalen Durchlaßbereichs sperren die Wellenlänge $\lambda_i$.

Erfaßt eines oder mehrere der Lichtleiterbündel 15 optische Strahlung (z. B. Laserstrahlung) mit Strahlungsanteilen bei den diskreten Wellenlängen $\lambda_1$, $\lambda_2$, $\lambda_3$, ..., so existieren jeweils zugeordnete Positionen $x_1$, $x_2$, $x_3$, ..., bei welchen der Bandpaßkeil durchlässig ist. An allen diesen Positionen werden die Wandler eines optisch-elektrischen Zeilendetektors 24 bestrahlt. Durch Abfrage der Detektorelemente können die Positionen $x_1$, $x_2$, $x_3$, ... ermittelt werden. Damit sind auch die ungeordneten Wellenlängen $\lambda_1$, $\lambda_2$, $\lambda_3$, ... bekannt, die aus einer Tabelle eines Datenspeichers in der Auswerteelektronik 14 (entsprechend wie beim Ausführungsbeispiel nach Fig. 3) entnommen werden können.

Ein Vorteil der Vorrichtung nach Fig. 4 ist, daß mit einem einzigen integrierten optisch-elektrischen Detektor mehrere gleichzeitig auftretende Spektralanteile erfaßt werden können, welche entweder von einer einzigen Strahlungsquelle oder auch von mehreren getrennten Strahlungsquellen stammen können. Der Information über die Wellenlänge läßt sich in der Auswerteelektronik wieder wie bei der ersten Weiterbildung die genaue Richtung jeder Strahlungsquelle zuordnen.

## Patentansprüche

1. Anordnung zum Ermitteln der Einfallsrichtung von optischer Strahlung mit optischen Kanälen in Form von Lichtleitern (4), deren eine Enden über eine gewölbte Fläche (3) gleichmäßig verteilt sind und die Fläche von innen durchdringend in dieser radial ausgerichtet gefaßt sind und deren andere Enden auf eine Mehrzahl von optisch-elektrischen Wandlern ausgerichtet sind, denen eine Auswerteschaltung nachgeordnet ist, dadurch gekennzeichnet, daß die Anzahl n der optisch-elektrischen Wandler mindestens gleich der Anzahl m der Lichtleiter (4) ist, d. h. $n \geq m$, daß die Lichtleiter (4) am anderen Ende ungeordnet zu einem Strang (6) vereinigt sind, der mit seiner Stirnfläche einer die n optisch-elektrischen Wandler enthaltenden Matrix (8) gegenübersteht, daß ein Zuordner (12) mit n Speicherplätzen vorgesehen ist, aus dem für jeden Wandler die laufende Nummer des zugehörigen Lichtleiters (4) entnehmbar ist, über den der jeweilige Wandler mit Licht beaufschlagt wird, daß ein Intensitätsspeicher (13) mit m Speicherplätzen vorgesehen ist, der so mit der Matrix (8) und dem Zuordner (12) verbunden ist, daß nach einem vom Zuordner gesteuerten vollständigen Abfragezyklus der Matrix (8) der Intensitätswert des zu jedem Lichtleiter (4) gehörenden Wandlers an einem dem betreffenden Lichtleiter (4) entsprechenden Platz abgespeichert ist und daß aus dem Inhalt des Intensitätsspeichers (13) mit Hilfe einer Auswerteelektronik (14) die Richtung und die dazugehörige Intensität der einfallenden Strahlung ermittelt und ausgegeben werden.

2. Anordnung nach Anspruch 1, dadurch gekennzeichnet, daß die optisch-elektrischen Wandler Speichereigenschaften haben.

3. Anordnung nach Anspruch 1 oder 2, dadurch gekennzeichnet, daß bei $n > m$ Wandlern das Ausgangssignal von jeweils nur einem derjenigen Wandler, die einem Lichtleiter (4) zuordenbar sind, zur Auswertung weitergeleitet wird.

4. Anordnung nach Anspruch 1 oder 2, dadurch gekennzeichnet, daß bei $n > m$ Wandlern die Ausgangssignale von mindestens einem Teil derjenigen Wandler, die einem Lichtleiter (4) zuordenbar sind zur Ermittlung der Lichtintensität, die dieser Lichtleiter (4) überträgt, verwendet werden, wobei im Intensitätsspeicher (13) die Summe der Intensitätswerte der zu jedem Lichtleiter (4) gehörenden Wandler abgespeichert wird.

5. Anordnung nach einem der Ansprüche 1 bis 4, dadurch gekennzeichnet, daß weitere, zu Bündeln (15) zusammengefaßte Lichtleiter (16) gleichmäßig über die Fläche (3) verteilt sind, daß eine Anzahl diskreter Detektoren (17) vorgesehen ist, denen je ein Filter (18, 19, 20) für einen bestimmten Spektralbereich vorgeschaltet ist, daß die Anzahl der Lichtleiter (16) in jedem Bündel (15) gleich der Anzahl der Detektoren (17) ist, daß je ein Lichtleiter (16) jedes Bündels (15) auf einen der Detektoren (17) geführt ist und daß die Ausgänge der Detektoren (17) über einen Analog/Digitalwandler (21) mit der Auswerteelektronik (14) verbunden sind derart, daß diese zusätzlich zur Richtungs- und Intensitätsinformation eine Information über die Wellenlänge der detektierten Strahlung abgibt.

6. Anordnung nach einem der Ansprüche 1 bis 4, dadurch gekennzeichnet, daß weitere, zu Bündeln (15) zusammengefaßte Lichtleiter (16) gleichmäßig über die Fläche (3) verteilt sind, daß für jedes Bündel zeilenförmig angeordnete Detektoren (24) vorgesehen sind, wobei jedem Lichtleiter eines Bündels ein Detektor einer Zeile zugeordnet ist, daß die Zeilen zueinander parallel angeordnet sind, daß zwischen die Lichtleiter und die Detektorzeilen ein Filter eingefügt ist, das so angeordnet und so beschaffen ist, daß ein Detektor einer Zeile nur jeweils dann ein Ausgangssignal abgibt, wenn das auf ihn auftreffende Licht eine bestimmte Wellenlänge aufweist und daß die Ausgänge der Detektoren über einen Analog/Digitalwandler (21) mit der Auswerteelektronik (14) verbunden sind derart, daß diese zusätzlich zur Richtungs- und Intensitätsinformation eine Information über die Wellenlänge der detektierten Strahlung abgibt.

7. Anordnung nach einem der Ansprüche 1 bis 4, dadurch gekennzeichnet, daß das obere Ende jedes Lichtleiters (4) mit einer Linsenkappe (5) versehen ist.

8. Anordnung nach einem der Ansprüche 1 bis 4, dadurch gekennzeichnet, daß jeder optische Kanal aus einem Bündel mit mehreren Lichtleitern (4) besteht.

9. Anordnung nach einem der Ansprüche 1 bis 4, dadurch gekennzeichnet, daß zwischen der Stirnfläche des Stranges (6) und der Detektormatrix (8) eine Abbildungsoptik (7) angeordnet ist.

10. Anordnung nach einem der Ansprüche 1 bis 4, dadurch gekennzeichnet, daß zwischen der Stirnfläche des Stranges (6) und der Matrix (8) ein optisches Filter oder ein Interferometer zur Unterdrückung von Störstrahlungsanteilen angeordnet ist.

**Claims**

1. Arrangement for determining the direction of incidence of optical radiation with optical channels in the form of optical fibres (4) the one ends of which are uniformly distributed over an arched surface (3) and, penetrating the surface from within, are radially directed in it, and the other ends of which are directed onto a plurality of optical-electrical transducers which are followed by an evaluation circuit, characterized in that the number n of optical-electrical transducers is at least equal to the number m of the optical fibres (4), i. e. n ≥ m, that the optical fibres (4), at the other end, are incoherently gathered into a bundle (6) which with its end face is positioned opposite to a matrix (8) containing the n optical-electrical transducers, that an allocator (12) having n memory locations is provided from which, for each transducer, there can be taken the consecutive number of the associated optical fibre (4) via which the transducer in question is hit by light, that an intensity memory (13) having m memory locations is provided and in such a way connected to both said matrix (8) and said allocator (12) that, following one complete sampling cycle of said matrix (8) controlled by said allocator, the intensity value of the transducer associated with each particular optical fibre (4) is stored at a location corresponding to the optical fibre (4) in question and that from the contents of the intensity memory (13), with the aid of an electronic evaluation facility (14), both the direction and the associated intensity of the incident radiation are determined and fed out.

2. An arrangement as claimed in Claim 1, characterized in that said optical-electrical transducers have storage properties.

3. An arrangement as claimed in Claim 1 or 2, characterized in that, in the case of n > m transducers, the output signal of in each case only one of those transducers which are capable of being allocated to an optical fibre (4) is passed on for evaluation.

4. An arrangement as claimed in Claim 1 or 2, characterized in that, in the case of n > m transducers, the output signals of at least some of those transducers which are capable of being allocated to an optical fibre (4) are used for determining the light intensity transmitted by said optical fibre (4), the sum of the intensity values of the transducers associated with each optical fibre (4) being stored in said intensity memory (13).

5. An arrangement as claimed in any one of Claims 1 to 4, characterized in that further optical fibres (16) gathered into bundles (15) are uniformly distributed over said surface (3), that there are a number of discrete detectors (17) which are each preceded by a filter (18, 19, 20) for a defined spectral region, that the number of optical fibres (16) in each bundle (15) is equal to the number of detectors (17), that in each case one optical fibre (16) of each bundle (15) is led to one of said detectors (17), and that the outputs of said detectors (17), via an analog-to-digital converter (21), are connected to said electronic evaluation facility (14) in such a way that the latter, in addition to the direction and intensity information, provides information concerning the wavelength of the detected radiation.

6. An arrangement as claimed in any one of Claims 1 to 4, characterized in that further optical fibres (16) gathered into bundles (15) are uniformly distributed over said surface (3), that for each bundle detectors (24) arranged line by line are provided, each optical fibre of a bundle having assigned to it one detector of a line, that the lines extend parallel to one another, that between the optical fibres and the detector lines a filter is inserted which is so disposed and of such a type that one detector of a line will each time only provide an output signal when the light impinging thereon has a defined wavelength, and that the outputs of said detectors, via an analog-to-digital converter (21), are connected to the electronic evaluation facility (14) in such a way that the latter, in addition to the direction and intensity information, provides information concerning the wavelength of the detected radiation.

7. An arrangement as claimed in any one of Claims 1 to 4, characterized in that the upper end of each of said optical fibres (4) is provided with a lens cap (5).

8. An arrangement as claimed in any one of Claims 1 to 4, characterized in that each optical channel consists of a bundle of several optical fibres (4).

9. An arrangement as claimed in any one of Claims 1 to 4, characterized in that imaging optics (7) are arranged between the end face of said bundle (6) and said detector matrix (8).

10. An arrangement as claimed in any one of Claims 1 to 4, characterized in that either an optical filter or an interferometer for suppressing interfering radiation components is arranged between the end face of said bundle (6) and said matrix (8).

## Revendications

1. Agencement pour déterminer la direction d'incidence d'un rayonnement optique, comprenant des canaux optiques, sous la forme de fibres optiques (4) dont les premières extrémités respectives sont uniformément distribuées sur une surface convexe (3) et sont fixées et orientées radialement par rapport à la surface qu'elles traversent de l'intérieur et dont les autres extrémités respectives sont orientées vers une pluralité de transducteurs opto-électriques qui sont suivis d'un dispositif d'évaluation, caractérisé en ce que le nombre n des transducteurs opto-électriques est au moins égal au nombre m des fibres optiques (4), c'est-à-dire que $n \geq m$, en ce que lesdites fibres optiques (4), à leur autre extrémité, sont réunies de façon incohérente en un faisceau (6) dont la face terminale est disposée en face d'une matrice (8) comprenant les n transducteurs opto-électriques, en ce qu'il est prévu un allocateur (12) ayant n emplacements de mémoire dans lesquels on peut obtenir, pour chaque transducteur, le numéro courant de la fibre optique associée (4), par laquelle le transducteur respectif est frappé par ladite lumière, en ce qu'il est prévu une mémoire d'intensités (13) ayant m emplacements de mémoire, couplée à ladite matrice (8) et audit allocateur (12) de manière que, après un cycle complet d'échantillonnage de la matrice (8) commandé par ledit allocateur, la valeur d'intensité fournie par le transducteur associé à chaque fibre optique particulière (4) soit enregistrée dans un emplacement correspondant à la fibre optique (4) considérée, et en ce que, à partir du contenu de la mémoire d'intensités (13) et à l'aide d'un dispositif électronique d'évaluation (14), la direction et l'intensité correspondante d'un rayonnement incident soient déterminées et fournies.

2. Agencement conforme à la revendication 1, caractérisée en ce que lesdits transducteurs opto-électriques ont des propriétés de stockage.

3. Agencement conforme à la revendication 1 ou 2, caractérisé en ce que, dans le cas de $n > m$ transducteurs, le signal de sortie respectif d'un seulement de ces transducteurs qui peut être affecté à une fibre optique (4) est acheminé pour être évalué.

4. Agencement conforme à la revendication 1 ou 2, caractérisé en ce que dans le cas de $n > m$ transducteurs, les signaux de sortie d'au moins une partie de ces transducteurs qui peuvent être associés à une fibre optique (4) sont utilisés pour déterminer l'intensité de lumière transmise par cette fibre optique (4), la somme des valeurs d'intensités des transducteurs associés à chaque fibre optique étant enregistrée dans ladite mémoire d'intensités (13).

5. Agencement conforme à l'une quelconque des revendications 1 à 4, caractérisé en ce que d'autres fibres optiques (16) réunies en faisceaux (15) sont uniformément réparties sur ladite surface (3), en ce que sont prévus plusieurs détecteurs discrets (17), chacun précédé par un filtre (18, 19, 20) pour une région spectrale définie, en ce que le nombre de fibres optiques (16) de chaque faisceau (15) est égal au nombre de détecteur (17), en ce que chacune des fibres optiques (16) de chacun des faisceaux (15) est couplée à l'un desdits détecteurs (17) et en ce que les sorties desdits détecteurs (17), par un convertisseur analogique-numérique (21), sont connectées audit dispositif électronique d'évaluation (14) de manière que ce dernier, outre les informations de direction et d'intensité, fournisse aussi une information concernant la longueur d'onde du rayonnement détecté.

6. Agencement conforme à l'une quelconque des revendications 1 à 4, caractérisé en ce que d'autres fibres optiques (16) réunies en faisceaux (15) sont uniformément réparties sur ladite surface (3), en ce que sont prévus, pour chaque faisceau, des détecteurs disposés en ligne (24), chaque fibre optique d'un faisceau étant affectée à un détecteur d'une ligne, en ce que les lignes s'étendent parallèlement les unes aux autres, en ce que, entre les fibres optiques et les lignes de détecteurs, il est inséré un filtre ainsi disposé et d'un type tel qu'un détecteur d'une ligne fournit un signal de sortie seulement lorsque la lumière qui le frappe possède une longueur d'onde définie, et en ce que les sorties desdits détecteurs, par un convertisseur analogique-numérique (21), sont connectées audit dispositif électronique d'évaluation (14), de manière que ce dernier, outre les informations de direction et d'intensité, fournisse aussi une information concernant la longueur d'onde du rayonnement détecté.

7. Agencement conforme à l'une quelconque des revendications 1 à 4, caractérisé en ce que l'extrémité supérieure de chacune desdites fibres optiques (4) est pourvue d'un capot à lentille (5).

8. Agencement conforme à l'une quelconque des revendications 1 à 4, caractérisé en ce que chaque canal optique consiste en un faisceau de plusieurs fibres optiques (4).

9. Agencement conforme à l'une quelconque des revendications 1 à 4, caractérisé en ce qu'une optique de formation d'image (7) est disposée entre la face terminale dudit faisceau (6) et ladite matrice de détecteurs (8).

10. Agencement conforme à l'une quelconque des revendications 1 à 4, caractérisé en ce qu'un filtre optique, ou un interféromètre, est disposé entre la face terminale dudit faisceau (6) et ladite matrice (8), pour supprimer des composantes de rayonnement parasites.

EP 0 114 053 B1

Fig.1

Fig.2

MATRIX

8a

9

9b

8

9a

A / D   10

Zuordner   12

∑   11

Jntensitätsspeicher   13

18   19   20

17

A / D   21

Auswerteelektronik   14

Ir   Ii   Iw

Fig.3

2

Fig.4

Auswerteelektronik

Fig.5

Fig.6

Transmission